# EUROPÄISCHE PATENTANMELDUNG

(11) **EP 4 411 556 A1**
(43) Veröffentlichungstag der Anmeldung: **07.08.2024**
(21) Anmeldenummer: 24154602.7
(22) Anmeldetag: 30.01.2024
(51) Int. Cl.: G06F 16/23, G06F 16/27, H04L 12/18, H04N 7/15

(54) **DEZENTRALE DATENBANK, VERFAHREN ZUM UNTERHALTEN EINER SOLCHEN UND DARAUF BASIERENDE KONFERENZ-ANWENDUNG**

(30) Priorität: 31.01.2023 DE 102023102250
(71) Anmelder: Alfaview Video Conferencing Systems GmbH & Co. KG, 76133 Karlsruhe (DE)
(72) Erfinder: Fostiropoulos, Nikolaos, 76139 Karlsruhe (DE)
(74) Vertreter: LBP Lemcke, Brommer & Partner Patentanwälte mbB

(57) **Zusammenfassung**

Beschrieben wird eine dezentrale, auf eine Mehrzahl von Teilnehmer-Endgeräte verteilte Datenbank (DB), die aus einer Mehrzahl einzelner Teilnehmer-Datenbanken mit jeweiligen Datensätzen (1, 2, 3, ...) gebildet ist, welche Datensätze (1, 2, 3, ...) über Datenkanäle miteinander synchronisiert oder synchronisierbar sind, bei der
die Teilnehmer zu einem dynamisch veränderlichen Cluster zusammengeschlossen sind;
einer der Teilnehmer in dem Cluster als Entscheider (C) ausgewählt oder auswählbar ist;
jeder der Teilnehmer dazu ausgebildet ist, lokal Einträge in eine Teilnehmer-Datenaufnahmestruktur (RT1, RT2) zu erzeugen und diese Einträge zumindest an den Entscheider (C) zur Freigabe zu übermitteln;
der Entscheider (C) dazu ausgebildet ist, seine eigenen Einträge und die von den anderen Teilnehmern empfangenen Einträge sukzessive in seiner Teilnehmer-Datenbank (OT) anzuordnen und freizugeben; und
die anderen Teilnehmer dazu ausgebildet sind, die freigegebenen Einträge entsprechend ihrer Anordnung in der Teilnehmer-Datenbank (OT) des Entscheiders (C) in ihre jeweilige eigene Teilnehmer-Datenbank zu kopieren, vorzugsweise sukzessive jeweils nach erfolgter Freigabe.

Die Datenbank (DB) kann vorteilhafterweise insbesondere zum Durchführen serverloser Videokonferenzen verwendet werden.

## Beschreibung

Die Erfindung betrifft mit dem Anspruch 1 eine dezentrale, auf eine Mehrzahl von Teilnehmer-Endgeräte bzw. dortige Anwendungen verteilte Datenbank, die aus einer Mehrzahl einzelner Teilnehmer-Datenbanken mit jeweiligen Datensätzen gebildet ist, welche Datensätze über Datenkanäle miteinander synchronisiert oder synchronisierbar sind.

Die Erfindung betrifft mit dem Anspruch 8 weiterhin eine computerbasierte Konferenz-Anwendung, welche die verteilte Datenbank umfasst.

Die Erfindung betrifft mit dem Anspruch 10 außerdem ein Verfahren zum Unterhalten einer dezentralen, auf eine Mehrzahl von Teilnehmer-Endgeräte bzw. dortige Anwendungen verteilten Datenbank, die aus einer Mehrzahl einzelner Teilnehmer-Datenbanken mit jeweiligen Datensätzen gebildet ist, welche Datensätze über Datenkanäle miteinander synchronisiert werden oder synchronisierbar sind.

Schließlich betrifft die Erfindung mit dem Anspruch 15 ein Verfahren zum Durchführen einer computerbasierten Konferenz, welches das Verfahren zum Unterhalten einer verteilten Datenbank beinhaltet.

In letzter Zeit haben sich Video-Konferenzsysteme zu einem wichtigen und alltäglichen Arbeitsmittel entwickelt, auch aufgrund der verstärkten Nutzung von Home-Offices im Zuge der Corona-Pandemie.

Vielfältige solche Systeme sind bekannt, und es existieren entsprechende vielzählige Videokonferenzanbieter, die regelmäßig auf einen zentralen, bei Anbieter vorgehaltenen Server zugreifen. Für den Nutzer nachteilig ist dabei, dass im Verlauf einer Konferenz vielfältig persönliche Daten an den Videokonferenzanbieter bzw. den Server übermittelt werden. Außerdem entstehen durch diese Technologie entsprechende Serverabhängigkeiten und Serverkosten, die in der Regel an die Kunden bzw. Nutzer weitergegeben werden.

Es besteht demnach Bedarf an einer Lösung, die keinen zentralen Server für den Austausch von Video- und Audiodaten verwendet, sodass die gesendeten Video- und Audiodaten bei den Teilnehmern der Konferenz verbleiben, weil die Kommunikation serverlos stattfindet.

Weiterhin besteht Bedarf an einer Lösung, bei der keine Serverabhängigkeiten und Serverkosten entstehen, die an die Kunden weitergegeben werden, damit Videokonferenzen ökonomischer werden.

Der Erfindung liegt die Aufgabe zugrunde, diesen Bedarf zu befriedigen und zu diesem Zweck eine dezentrale, auf eine Mehrzahl von Teilnehmer-Endgeräte bzw. dortige Anwendungen verteilte Datenbank, ein Verfahren zu deren Unterhalt, eine hierauf basierende Konferenz-Anwendung sowie ein entsprechendes Konferenz-Verfahren anzugeben, die bzw. das ohne zentralen Server und die damit einhergehenden Probleme der Datensicherheit, Abhängigkeiten und Nutzungskosten auskommt.

Diese Aufgabe wird gelöst durch die dezentrale, auf eine Mehrzahl von Teilnehmer-Endgeräte verteilte Datenbank gemäß Anspruch 1, durch die computerbasierte Konferenz-Anwendung gemäß Anspruch 8, durch das Verfahren zum Unterhalten einer dezentralen, auf eine Mehrzahl von Teilnehmer-Endgeräte verteilten Datenbank gemäß Anspruch 10 und durch das Verfahren zum Durchführen einer computerbasierten Konferenz gemäß Anspruch 15.

Vorteilhafte Weiterbildungen sind in den jeweiligen Unteransprüchen definiert.

Gemäß einem ersten Aspekt der Erfindung schafft diese eine dezentrale, auf eine Mehrzahl von Teilnehmer-Endgeräte bzw. dortige (Software-)Anwendungen verteilte Datenbank, die aus einer Mehrzahl einzelner Teilnehmer-Datenbanken mit jeweiligen Datensätzen gebildet ist, welche Datensätze über Datenkanäle miteinander synchronisiert oder synchronisierbar sind, bei der die Teilnehmer zu einem dynamisch veränderlichen Cluster zusammengeschlossen sind; einer der Teilnehmer

in dem Cluster als Entscheider ausgewählt oder auswählbar ist; jeder der Teilnehmer dazu ausgebildet ist, lokal Einträge in eine Teilnehmer-Datenaufnahmestruktur zu erzeugen und diese Einträge zumindest an den Entscheider zur Freigabe zu übermitteln; der Entscheider dazu ausgebildet ist, seine eigenen Einträge und die von den anderen Teilnehmern empfangenen Einträge sukzessive in seiner Teilnehmer-Datenbank anzuordnen und freizugeben; und die anderen Teilnehmer dazu ausgebildet sind, die freigegebenen Einträge entsprechend ihrer Anordnung in der Teilnehmer-Datenbank des Entscheiders in ihre jeweilige eigene Teilnehmer-Datenbank zu kopieren, vorzugsweise sukzessive jeweils nach erfolgter Freigabe.

Gemäß einem zweiten Aspekt der Erfindung schafft diese eine computerbasierte Konferenz-Anwendung, umfassend: die verteilte Datenbank nach dem ersten Aspekt der Erfindung; eine Konferenz-Applikation mit Nutzeroberfläche, welche Konferenz-Applikation auf jedem Teilnehmer-Endgerät ausgeführt wird oder ausführbar ist; eine auf jedem Teilnehmer-Endgerät ausgeführte oder ausführbare Hauptapplikation zum Anbinden der jeweiligen Konferenz-Applikation an die verteilte Datenbank, bei entsprechender Weiterbildung insbesondere zum Schaffen von geeigneten WebRTC-Datenkanälen.

Gemäß einem dritten Aspekt der Erfindung schafft diese ein Verfahren zum Unterhalten einer dezentralen, auf eine Mehrzahl von Teilnehmer-Endgeräte bzw. dortige (Software-)Anwendungen verteilten Datenbank, die aus einer Mehrzahl einzelner Teilnehmer-Datenbanken mit jeweiligen Datensätzen gebildet ist, welche Datensätze über Datenkanäle miteinander synchronisiert werden oder synchronisierbar sind, bei der die Teilnehmer sich zu einem dynamisch veränderlichen Cluster zusammenschließen; einer der Teilnehmer in dem Cluster als Entscheider ausgewählt wird; jeder der Teilnehmer lokal Einträge in eine Teilnehmer-Datenaufnahmestruktur erzeugt und diese Einträge zumindest an den Entscheider zur Freigabe übermittelt; der Entscheider seine eigenen Einträge und die von den anderen Teilnehmern empfangenen Einträge sukzessive in seiner Teilnehmer-Datenbank anordnet und dann freigibt; und die anderen Teilnehmer die freigegebenen Einträge entsprechend ihrer Anordnung in der Teilnehmer-Datenbank des Entscheiders in ihre jeweilige eigene Teilnehmer-Datenbank übernehmen, vorzugsweise sukzessive jeweils nach erfolgter Freigabe, höchst vorzugsweise automatisch.

Gemäß einem vierten Aspekt der Erfindung schafft diese ein Verfahren zum Durchführen einer computerbasierten Konferenz, also einer rechnergestützten audiovisuellen Kommunikation, umfassend: Unterhalten einer verteilten Datenbank nach dem ersten Aspekt bzw. gemäß dem dritten Aspekt der Erfindung; Bereitstellen und Ausführen einer Konferenz-Applikation mit Nutzeroberfläche auf jedem Teilnehmer-Endgerät; Anbinden der jeweiligen Konferenz-Applikation an die verteilte Datenbank, bevorzugt durch Ausführen einer Hauptapplikation auf jedem Teilnehmer-Endgerät, bei entsprechender Ausgestaltung insbesondere durch Schaffen der WebRTC-Datenkanäle.

Durch die Nutzung der dezentralen Datenbank ist im Rahmen der Erfindung kein zentraler Server erforderlich, um insbesondere eine Videokonferenz durchzuführen. Dadurch entfällt die angesprochene Datenproblematik, und es kommt zu keinen Abhängigkeiten und Mehrkosten. Die erfindungsgemäße Lösung ist besonders ökonomisch, weil sie Ressourcen der Teilnehmer nutzt, die bei der Kommunikation sowieso aktiv sind.

Die computerbasierte Konferenz-Anwendung kann als sog. Web-Applikation ausgebildet sein, die jeweils im Browser eines Nutzers ausgeführt wird oder ausführbar ist. Die Web Applikation stellt damit ein neuartiges Videokonferenzsystem dar, das im Browser ausgeführt wird und ohne zentralen Server auskommt. Die Web-Applikation besteht im Kern aus der dezentralen Datenbank, die über die Konferenzteilnehmer verteilt und synchronisiert ist. Sie enthält vorzugsweise alle relevanten Informationen bezüglich der Konferenz-/Cluster-Topologie und ermöglicht es beispielsweise, dass aktive Teilnehmer der Konferenz (VIP-Sprecher) angezeigt und gehört werden können, während passive Teilnehmer (Zuhörer) vollautomatisch und dynamisch in den Hintergrund gelegt werden können.

Folgende grundlegende technische Rahmenbedingen liegen der Applikation (der Anwendung) und der zugehörigen Datensicherheit vorzugsweise zugrunde:
Die Anwendung ist bevorzugt eine Webanwendung und verwendet insbesondere folgende Protokolle:
- https für den Download der Applikation in den Browser eines Teilnehmers/Nutzers;
- WebRTC zum Aufbau der verteilten Datenbank und einer darauf basierenden Konferenz (UDP/TCP und hohe Portrange);
- die Datenbank ist eine eigene Software und vorzugsweise in Javascript geschrieben;
- die Konferenzapplikation ist eine separate, eigene Software und vorzugsweise in Javascript geschrieben.

Vorzugsweise existieren keinerlei Daten, die über einen zentralen Server gehen.

Bestimmte Hilfstechnologien können jedoch verwendet werden, um eine Konferenz (einen Teilnehmer-Cluster) aufzubauen und/oder bei Abbrüchen zu aktualisieren. Jede dieser Hilfstechnologien ist ein Baustein und kann grundsätzlich durch eine andere geeignete Technologie ersetzt oder modifiziert werden.

Bestimmte Ausgestaltungen der Erfindung können vorsehen, dass (ausschließlich) über diese Hilfstechnologien personenbezogene Daten ausgetauscht werden.

Die genannten Hilfstechnologien umfassen:
- STUN-Server: dient zur Ermittlung von Verbindungsadressen (IP/Port). Kann auch dazu dienen, Löcher in Firewalls zu schlagen. Es gibt frei verwendbare STUN-Server, die genutzt werden können, ohne dass hierfür ein eigener Server aufgesetzt werden muss. Folgende (personenbezogene) Daten werden ggf. über den STUN-Server ausgetauscht: IP, Port.
- Signal Server: dient dazu, anderen Teilnehmern Verbindungsdaten (IP/PORT/Video- und Audio-Metadaten) zuzusenden. Folgende (personenbezogene) Daten werden über den Signal-Server ausgetauscht: IP/PORT/Video- und Audio-Metadaten.
- TURN-Server: optionaler Server, der als Mittler einspringt, um Audio- und Videoströme zu übertragen, wenn die technischen Voraussetzungen für eine Konferenz nicht gegeben sind. Folgende (personenbezogene) Daten werden über den TURN-Server ausgetauscht: IP/PORT/Video- und Audio-Metadaten und sicher verschlüsselte Video- und Audioströme.

Vorteilhafte Ausgestaltungen der dezentralen, verteilten Datenbank im Browser umfassen eines oder mehrere der folgenden Merkmale:
Die Datenbank ist eine Javascript-Anwendung, welche im Browser eines Teilnehmers bzw. Nutzers läuft.

Es handelt sich erfindungsgemäß um eine dezentrale, verteilte Datenbank. Sie heißt "verteilt", weil die Daten auf mehrere (Teilnehmer-)Datenbanken, d.h. bei den einzelnen Teilnehmern, also z.B. auf ihren Endgeräten, geführte Datenbanken kopiert und verteilt werden. Sie heißt "dezentral," weil es keine Master-Datenbank gibt. Alle Datenbanken sind gleichwertig.

Jede einzelne Datenbank läuft vorzugsweise nur im Browser und schließt sich mit den anderen Datenbanken in anderen Browser-Tabs zu einem verteilten, dezentralen Cluster zusammen. Die Datenbanken synchronisieren bevorzugt automatisch ihre Datensätze (Einträge) miteinander.

Die erzeugten Daten werden vorzugsweise lokal im Browser des eigenen Rechners/Endgeräts des Nutzers gespeichert und niemals an zentrale Server versendet. Die Daten werden bevorzugt nur so lange gespeichert, wie ein entsprechender Browser-Tab geöffnet bleibt.

Im Zuge eines äußerst vorteilhaften Ansatzes, d.h. einer Ausgestaltung der Erfindung bildet ein sog. Append Only Log die Basis der Implementierung. Ein Append Only Log ist ein Speichermedium, in das man nur schreiben und aus dem niemals gelöscht werden darf. Jeder Eintrag bekommt vorzugsweise eine eigene ID oder Identifizierung, die fortlaufend sein kann. Dieses Konzept ist einfach und sehr effektiv. Ein Merkle Tree sowie eine Blockchain sind bekannte Beispiele für ein Append Only Log.

Ein solches Log ist vielleicht die einfachste mögliche Speicherabstraktion. Es ist eine nur durch Anhängen (Hinzufügen) erweiterbare geordnete Folge von Datensätzen, die nach Zeit geordnet sind. Die neuen Datensätze werden an das Ende des Logs angehängt. Die Reihenfolge der Datensätze definiert somit einen Begriff von "Zeit", da neu angehängte Einträge auf der einen Seite des Logs als älter definiert sind als Einträge auf der anderen Seite. Die Nummer eines Log-Eintrags kann somit als eine Art "Zeitstempel" des Eintrags betrachtet werden. Die Beschreibung der Reihenfolge als Zeitbegriff hat die praktische Eigenschaft, dass sie von einer bestimmten physikalischen Uhr entkoppelt ist. Diese Eigenschaft ist wichtig bei der Verwendung von Logs in verteilten Systemen, z.B. dem erwähnten Teilnehmer-Cluster.

Anders ausgedrückt: In einem Append Only Log, können die Daten als geordnete Abfolge von Dateneinträgen betrachtet werden. Die eindeutige Abfolge entsteht durch die zeitliche Reihenfolge, in der die Datensätze in das Append Only Log eingetragen wurden. Man spricht deswegen von zeitlich eindeutig geordneten Datensätzen. Jedem Dateneintrag kann ein eindeutiger Zeitstempel zugeordnet werden. Dieser Zeitstempel hat aber nur eine untergeordnete Bedeutung für das Append Only Log selbst; er dient eher für Anwendungen, die mit Append Only Logs arbeiten.

Ein Log unterscheidet sich nicht wesentlich von einer Datei oder einer Tabelle: Eine Datei ist ein Array von Bytes, eine Tabelle ist ein Array von Datensätzen, und ein Log ist eigentlich nur eine Art Tabelle oder Datei, bei der die Datensätze nach der Zeit (ihrer Erzeugung oder ihres Eintrags) sortiert sind.

Für die gegenseitige Verbindung der einzelnen Datenbanken untereinander und den zugehörigen Datenaustausch können im Rahmen der Erfindung WebRTC Data Channels (WebRTC-Datenkanäle) verwendet werden. Dabei tauschen lokale unabhängige Append Only Logs ständig ihre Daten miteinander aus.

WebRTC (Web Real-Time Communication, deutsch "Web-Echtzeitkommunikation") ist ein an sich bekannter, offener Standard, der eine Sammlung von Kommunikationsprotokollen und Programmierschnittstellen (API) definiert, die Echtzeitkommunikation über Rechner-Rechner-Verbindungen ermöglichen. Damit können Web-browser nicht mehr nur Datenressourcen von Backend-Servern abrufen, sondern auch Echtzeitinformationen von Browsern anderer Benutzer.

Da gleichzeitige Änderungen eines Datenbankeintrages ein wesentliches Problem von dezentralen, verteilten Datenbanken darstellen, wird im Rahmen der Erfindung ein einzelner Entscheider ("Committer") eingesetzt, der die Reihenfolge der Änderungen bestimmt, um die Konsistenz der verteilten Daten zu bewahren.

Der Committer bestimmt bei entsprechender Ausgestaltung der Erfindung die Reihenfolge der Änderungen im Append Only Log. Der Committer arbeitet demnach bevorzugt auf dem Append Only Log und nicht auf der Datenbank. Aufbauend auf Append Only Logs lassen sich an sich bekannter Weise weiteren Prinzipen einer Datenbank programmieren (delete, insert, select, update).

Strenggenommen ist der grundlegende Baustein der vorliegenden Erfindung zunächst also "nur" ein Log und noch keine vollwertige Datenbank. Abstrahierend kann jedoch durchaus bereits von einer Datenbank gesprochen werden, weil nach dem Vorstehenden auf Basis eines solchen Logs ohne Weiteres eine Datenbank entwickelt werden kann. Vorliegend wird also von einer Datenbank im weiteren Sinne gesprochen, deren Funktionsweise auf ein Log zurückzuführen ist.

Jeder einzelne Teilnehmer kann bei entsprechender Ausgestaltung der Erfindung jeden Datensatz oder Eintrag in der Datenbank ändern, muss sich ihn aber vom Committer bestätigen lassen. Die zeitliche Reihenfolge der Eintragungen und Änderungen bestimmt also allein der Committer. Dieser Prozess wird vorliegend auch "committen" genannt. Quasi gleichzeitige Änderungen werden somit in eine Ordnung gebracht, um eine Datenkonsistenz zu erreichen.

Ein fundamentales Problem bei der Umsetzung der vorliegenden Erfindung liegt im Festlegen bzw. Aushandeln des Entscheiders (Committers): Während zentrale (Backend-)Server eine relativ lange Lebensspanne haben (in der Größenordnung Minuten, Stunden, Monate bis zu Jahren) und sich deshalb relativ viel Zeit nehmen beim Aushandeln eines Entscheiders, der entsprechend ebenfalls eine lange Lebenszeit hat, ist das bei der bevorzugten Verwendung in einem Browser nicht der Fall. Hier ist vielmehr mit einer Lebenserwartung im Bereich von Sekunden zu rechnen.

Dieses Problem wurde bei bestimmten Ausgestaltungen der Erfindung zu einem grundlegenden Prinzip gemacht: Bei derartigen Ausgestaltungen hat ein Committer nur eine Lebenszeit von wenigen Sekunden. Jede im Cluster teilnehmende Datenbank (Teilnehmer-)Datenbank kann Committer sein bzw. einen Committer aufweisen oder mit einem Committer in Wirkverbindung stehen. Jede Änderung im Aufbau des Clusters führt bevorzugt zu einer neuen Festlegung (Neuverhandlung) des Committers. Nur Daten, die von einem Committer in die Datenbank committet wurden, haben bei entsprechender Ausgestaltung der Erfindung Wahrheitsgehalt und sind für die Nutzung relevant. Ein neu ermittelter Committer ist derart ausgebildet und sorgt bevorzugt als erstes dafür, dass alle Commits, d.h. die committeten Einträge des vorherigen Committers an alle Teilnehmer bzw. deren Datenbanken verteilt werden, bevor er seinerseits neue Commits erzeugt.

Dem CAP-Theorem entsprechend werden im Rahmen der Erfindung Abstriche sowohl im Bereich der Konsistenz als auch bei der Verfügbarkeit gemacht. Das CAP-Theorem oder Brewers Theorem besagt, dass es in einem verteilten System unmöglich ist, gleichzeitig die drei Eigenschaften Consistency (Konsistenz), Availability (Verfügbarkeit) und Partition Tolerance (Ausfalltoleranz) zu garantieren. Die einzelnen Datenbanken sind folglich nicht immer in einem gleichen Zustand. Um im Rahmen der Erfindung den gleichen Zustand zu generieren, wird das Cluster vorzugsweise kurz angehalten und synchronisiert.

Folgende Weiterbildungen der oben genannten Aspekte der vorliegenden Erfindung haben sich als besonders vorteilhaft erwiesen:
Bei einer Weiterbildung der erfindungsgemäßen verteilten Datenbank ist jede Veränderung des Clusters mit einer neuen Auswahl des Entscheiders verbunden.

So lässt sich insbesondere gewährleisten, dass bei Fortfall des letzten Entscheiders der Cluster weiterarbeiten kann.

Eine entsprechende Ausgestaltung des Verfahrens gemäß dem dritten Aspekt der Erfindung sieht vor, dass nach jeder Veränderung des Clusters eine neue Auswahl des Entscheiders erfolgt.

Bei einer Weiterbildung der erfindungsgemäßen verteilten Datenbank besitzt jeder einzelne Teilnehmer eine eindeutige Identifizierung und ist dazu eingerichtet, diese Identifizierung den anderen Teilnehmern in dem Cluster mitzuteilen, vorzugsweise bei jeder Veränderung des Clusters, wobei jeder einzelne Teilnehmer dazu eingerichtet ist, anhand der ihm mitgeteilten Identifizierungen den Entscheider eindeutig zu bestimmen. Dazu wird eine mathematische Ordnungsrelation auf der Menge aller möglichen Identifizierungen gebildet. Die Ordnungsrelation muss die mathematischen Eigenschaften, Reflexivität, Antisymmetrie, Transitivität und Totalität aufweisen. Mit Hilfe dieser Ordnungsrelation kann jeder Teilnehmer die mathematische Ordnung jedes Teilnehmers eindeutig bestimmen. Und dadurch kann jeder Teilnehmer anhand Identifizierungen autark den Entscheider ermitteln, z.B. den Erstplatzierten innerhalb der genannten Ordnung.

Auf diese Weise kann jeder Teilnehmer den Entscheider eindeutig selbst identifizieren, ohne dass es hierfür einer übergeordneten Zentraleinheit bedarf. Insbesondere kann derjenige Teilnehmer mit der größten (alphanumerischen) Identifizierung der (neue) Entscheider sein.

Eine entsprechende Ausgestaltung des Verfahrens gemäß dem dritten Aspekt der Erfindung sieht vor, dass jeder einzelne Teilnehmer eine eindeutige Identifizierung besitzt und diese Identifizierung den anderen Teilnehmern in dem Cluster mitteilt, vorzugsweise bei jeder Veränderung des Clusters, wobei jeder einzelne Teilnehmer anhand der ihm mitgeteilten Identifizierungen den Entscheider eindeutig bestimmt, zum Beispiel durch Anordnen der Identifizierungen in einer eindeutigen Reihenfolge und Auswahl eines Teilnehmers mit einer vorbestimmten Platzierung innerhalb dieser Reihenfolge als Entscheider, insbesondere des Erstplatzierten.

Bei einer Weiterbildung der erfindungsgemäßen verteilten Datenbank sind die Teilnehmer-Datenbanken und/oder die Teilnehmer-Datenaufnahmestrukturen ausschließlich lokal auf dem jeweiligen Teilnehmer-Endgerät gespeichert, insbesondere in einem Web-Browser.

Dadurch ist größtmögliche Datensicherheit gewährleistet.

Eine entsprechende Ausgestaltung des Verfahrens gemäß dem dritten Aspekt der Erfindung sieht vor, dass die Teilnehmer-Datenbanken und/oder die Teilnehmer-Datenaufnahmestrukturen ausschließlich lokal auf dem jeweiligen Teilnehmer-Endgerät gespeichert werden, insbesondere in einem Web-Browser.

Bei einer Weiterbildung der erfindungsgemäßen verteilten Datenbank sind die einzelnen Teilnehmer-Datenbanken über Datenkanäle in Form von WebRTC-Datenkanälen miteinander verbunden.

Eine entsprechende Ausgestaltung des Verfahrens gemäß dem dritten Aspekt der Erfindung sieht vor, dass die einzelnen Teilnehmer-Datenbanken über Datenkanäle in Form von WebRTC-Datenkanälen miteinander verbunden werden.

Auf die besonderen Vorteile dieser Ausgestaltung wurde weiter oben schon eingegangen.

Bei einer Weiterbildung der erfindungsgemäßen verteilten Datenbank sind die einzelnen Teilnehmer-Datenaufnahmestrukturen (und bevorzugt auch die Teilnehmer-Datenbanken) als Speichermedien ausgebildet, in die nur geschrieben und aus denen nicht gelöscht werden kann, also als sog. Append Only Logs.

Dies ermöglicht in einfacher Weise die Integration einer Art Zeitstempel, wie weiter oben bereits erläutert wurde.

Eine entsprechende Ausgestaltung des Verfahrens gemäß dem dritten Aspekt der Erfindung sieht vor, dass die einzelnen Teilnehmer ihre Einträge in Teilnehmer-Datenaufnahmestrukturen ablegen, die als Speichermedien ausgebildet sind, in die nur geschrieben und aus denen nicht gelöscht werden kann (Append Only Log).

Bei einer Weiterbildung der erfindungsgemäßen verteilten Datenbank umfasst jeder Eintrag wenigstens einen Zusatz, durch den er eindeutig identifizierbar ist, insbesondere hinsichtlich des ihn erzeugenden Teilnehmers und/oder der zeitlichen Position seiner Erzeugung.

Wenn die Einträge eindeutig identifizierbar sind, besteht für die Teilnehmer in einfacher Weise die Möglichkeit, die Datenbank auf das Vorhandensein bestimmter (eigener) Einträge zu überwachen, wenn diese nicht verloren gehen dürfen (sog. Schreibgarantie).

Eine entsprechende Ausgestaltung des Verfahrens gemäß dem dritten Aspekt der Erfindung sieht vor, dass jedem Eintrag wenigstens ein Zusatz hinzugefügt wird, der ihn eindeutig identifizierbar macht, insbesondere hinsichtlich des ihn erzeugenden Teilnehmers und/oder der zeitlichen Position oder Reihenfolge seiner Erzeugung.

Bei einer anderen Weiterbildung der erfindungsgemäßen verteilten Datenbank ist wenigstens eine Anzahl der Teilnehmer dazu eingerichtet, die in die jeweilige Teilnehmer-Datenbank kopierten Einträge laufend zu überwachen und einen dort nicht enthaltenen eigenen Eintrag ggf. erneut zur Freigabe an den Entscheider zu übermitteln.

Zu diesem Zweck kann insbesondere auf den weiter oben erwähnten Zusatz zurückgegriffen werden, um die Einträge zu überwachen.

Eine entsprechende Ausgestaltung des Verfahrens gemäß dem dritten Aspekt der Erfindung sieht vor, dass wenigstens eine Anzahl der Teilnehmer die in die jeweilige Teilnehmer-Datenbank kopierten Einträge laufend überwacht und einen dort nicht enthaltenen eigenen Eintrag ggf. erneut zur Freigabe an den Entscheider übermittelt.

Bei einer Weiterbildung der erfindungsgemäßen verteilten Datenbank sind die Teilnehmer dazu ausgebildet, zusammen mit oder zusätzlich zu der Identifizierung, beispielsweise also bei einer Veränderung des Clusters, einen gegenwärtigen Stand ihrer jeweiligen Teilnehmer-Datenbank zu übermitteln oder anzuzeigen, insbesondere in Form eines letzten in ihrer jeweiligen Teilnehmer-Datenbank enthaltenen Eintrags, insbesondere anhand des zuvor erwähnten Zusatzes; und ein neu ermittelter Entscheider ist dazu ausgebildet, zuerst sicherzustellen, dass alle Teilnehmer-Datenbanken einen gleichen Stand aufweisen, insbesondere durch Übermittlung der von einem vorherigen Entscheiders freigegebenen Einträge auf die einzelnen Teilnehmer-Datenbanken, vor einer Erzeugung weiterer Freigaben durch den neu ermittelten Entscheider.

Dies entspricht der weiter oben gewählten Formulierung, wonach der Cluster "angehalten" wird, damit zuerst alle Teilnehmer ihre Datenbanken auf denselben Stand bringen können.

Eine entsprechende Ausgestaltung des Verfahrens gemäß dem dritten Aspekt der Erfindung sieht vor, dass die Teilnehmer zusammen mit oder zusätzlich zu der Identifizierung einen Stand ihrer jeweiligen Teilnehmer-Datenbank übermitteln, insbesondere in Form eines letzten in ihrer jeweiligen Teilnehmer-Datenbank enthaltenen Eintrags, insbesondere durch Übermitteln des genannten Zusatzes; und dass ein neu ermittelter Entscheider zuerst sicherstellt, dass alle Teilnehmer-Datenbanken einen gleichen Stand aufweisen, insbesondere durch Übermittlung der von einem vorherigen Entscheiders bereits freigegebenen Einträge an die einzelnen Teilnehmer-Datenbanken, bevor der neu ermittelte Entscheider selbst weitere Freigaben erzeugt.

Bei einer Weiterbildung der erfindungsgemäßen verteilten Datenbank enthalten die Einträge Informationen betreffend eine Topologie des Clusters.

Auf diese Weise kann insbesondere sichergestellt werden, dass alle Teilnehmer einer Konferenz die richtigen Datenkanäle zu den jeweils anderen Teilnehmern aufbauen (Senden und/oder Empfangen, VIP-Sprecher oder bloße Zuhörer).

Eine Weiterbildung der erfindungsgemäßen Konferenz-Anwendung umfasst wenigstens eine der folgenden Hilfstechnologien zum Aufbauen des Clusters (der Konferenz) oder zum Aktualisieren des Clusters (der Konferenz) bei Abbrüchen, nämlich:
a) einen STUN-Server zur Ermittlung von Verbindungsadressen, insbesondere IP- und/oder Port-Adressen der Teilnehmer, und/oder zum Schaffen von Löchern in bei den Teilnehmern vorhandene Firewalls;
b) einen Signal Server zum Senden von Verbindungsdaten, insbesondere IP/PORT/Video- und Audio-Metadaten an Teilnehmer des Clusters;
c) einen optionalen TURN-Server, der dazu ausgebildet ist, als Mittler einzuspringen, um Audio- und Videoströme zu übertragen, vorzugsweise verschlüsselt, wenn die technischen Voraussetzungen für eine Konferenz nicht gegeben sind.

Eine entsprechende Ausgestaltung des Verfahrens gemäß dem vierten Aspekt der Erfindung umfasst ein Aufbauen des Clusters (der Konferenz) oder ein Aktualisieren des Clusters (der Konferenz) bei Abbrüchen durch Verwendung
a) eines STUN-Servers zur Ermittlung von Verbindungsadressen, insbesondere IP- und/oder Port-Adressen der Teilnehmer, und/oder zum Schaffen von Löchern in bei den Teilnehmern vorhandene Firewalls; und/oder
b) eines Signal Servers zum Senden von Verbindungsdaten, insbesondere IP/PORT/Video- und Audio-Metadaten an Teilnehmer des Clusters; und/oder
c) eines optionalen TURN-Servers als Mittler, um Audio- und Videoströme zu übertragen, vorzugsweise verschlüsselt, wenn die technischen Voraussetzungen für eine Konferenz nicht gegeben sind.

Hierauf wurde weiter oben schon hingewiesen.

Ein TURN-Server kann bereits per Spezifikation Ende-zu-Ende verschlüsselt sein bzw. kommunizieren. Bevorzugt ist jede Medien-Übertragung im Rahmen der vorliegenden Erfindung Ende-zu-Ende verschlüsselt ist.

Eine andere Weiterbildung der erfindungsgemäßen Konferenz-Anwendung umfasst einen Algorithmus, vorzugsweise in der Hauptapplikation, der dazu ausgebildet ist zu entscheiden, welche Teilnehmer untereinander Video- und/oder Audio-Ströme übertragen, wozu jedem Teilnehmer eine Nummer zugeordnet ist, insbesondere beginnend bei Eins und aufsteigend, welche Nummern vorzugsweise in Abhängigkeit von einer zeitlichen Reihenfolge des Einwählens eines Teilnehmers in den Cluster (die Konferenz) vergeben sind, wobei in der Konferenz-Applikation für jeden Teilnehmer festlegbar ist, zu welchem anderen Teilnehmer ein Video-/Audio-Strom zu öffnen ist, wobei sich die einzelnen Teilnehmer über die Datenkanäle untereinander koordinieren, vorzugsweise entsprechend der bekannten Cluster-Topologie.

Eine entsprechende Ausgestaltung des Verfahrens gemäß dem vierten Aspekt der Erfindung sieht vor, dass entschieden wird, welche Teilnehmer untereinander Video- und/oder Audio-Ströme übertragen, indem jedem Teilnehmer eine Nummer zugeordnet wird, insbesondere beginnend bei Eins und aufsteigend, welche Nummern vorzugsweise in Abhängigkeit von einer zeitlichen Reihenfolge des Einwählens eines Teilnehmers in den Cluster (die Konferenz) vergeben werden, wobei für jeden Teilnehmer festlegbar wird, zu welchem anderen Teilnehmer ein Video-/Audio-Strom zu öffnen ist, wobei sich die einzelnen Teilnehmer über die Datenkanäle untereinander koordinieren, vorzugsweise entsprechend der bekannten Cluster-Topologie.

Auf diese Weise lassen sich die Teilnehmer einfach identifizieren und zu der gewünschten Konferenz zusammenschalten. Die Topologie kann durch Verwendung der dezentralen Datenbank einfach und schnell dynamisch modifiziert werden, indem insbesondere Teilnehmer ihre Plätze innerhalb der Topologie tauschen und dies dem gesamten Custer mitgeteilt wird.

Eine wieder andere Weiterbildung der erfindungsgemäßen Konferenz-Anwendung sieht vor, dass zu einer bestehenden Datenkanalverbindung, insbesondere WebRTC-Verbindung, dynamisch Video- und/oder Audio-Ströme hinzufügbar und/oder davon entfernbar sind, wobei jeder Teilnehmer einen sendenden und einen empfangenden Transceiver besitzt, zu welchem Zweck die Anwendung, insbesondere die Hauptapplikation, dazu ausgebildet ist, die betreffenden Video- und/oder Audio-Strom-Transceiver auf beiden Teilnehmer-Seiten des betreffenden Datenkanals zu öffnen oder zu schließen.

Eine entsprechende Ausgestaltung des Verfahrens gemäß dem vierten Aspekt der Erfindung sieht vor, dass zu einer bestehenden Datenkanal-Verbindung, insbesondere WebRTC-Verbindung, dynamisch Video- und/oder Audio-Ströme hinzugefügt und/oder davon entfernt werden, wobei jeder Teilnehmer einen sendenden und einen empfangenden Transceiver besitzt, zu welchem Zweck die betreffenden Video- und/oder Audio-Strom-Transceiver auf beiden Teilnehmer-Seiten des betreffenden Datenkanals geöffnet oder geschlossen werden.

So lässt sich eine Konferenz leicht dynamisch aktualisieren.

Weitere Eigenschaften und Vorteile ergeben sich aus der nachfolgenden Beschreibung von Ausführungsbeispielen anhand der Zeichnung.
Figur 1 zeigt ein Append Only Log-Speichermedium;
Figur 2 illustriert die Funktion des Entscheiders oder Committers;
Figur 3 illustriert die Synchronisation der Teilnehmer-Datenbanken;
Figur 4 illustriert ein mögliches Aushandeln des Entscheiders;
Figur 5 illustriert ein weiteres mögliches Aushandeln des Entscheiders;
Figur 6 illustriert noch ein weiteres mögliches Aushandeln des Entscheiders;
Figur 7 zeigt eine Ausgestaltung der erfindungsgemäßen Konferenz-Anwendung;
Figur 8 zeigt ein Detail der Ausgestaltung in Figur 7;
Figur 9 zeigt einen Teilnehmer-Cluster; und
Figur 10 zeigt die Darstellung einer Cluster-Topologie.

In den Figuren bezeichnen gleiche Bezugszeichen gleiche oder zumindest gleichwirkende Elemente.

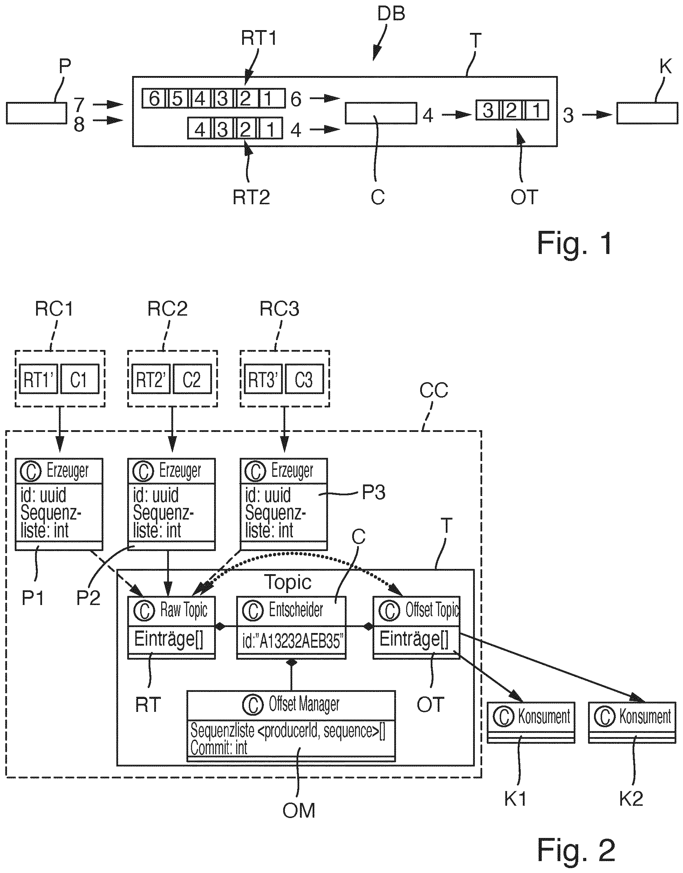

In der Figur 1 ist die Verwendung eines Append Only Logs dargestellt, wie es im Rahmen der Erfindung innerhalb der verteilten Datenbank zum Einsatz kommen kann.

Speziell ist in Figur 1 der Datenfluss genauer dargestellt. Die erfindungsgemäße Datenbank bzw. das dieser zugrunde liegende Log (siehe oben; nachfolgend auch "AlfaLog" genannt) speichert jede empfangene Nachricht als einen Datensatz in einem sog. Topic T. Die einzelnen Nachrichten sind in Figur 1 als Ziffern 1, 2, 3, ... dargestellt. Sie stammen von einem (oder mehreren) Erzeugern ("Producer") P und werden in das Topic T geschrieben. Zur Verdeutlichung kann man sich ein Topic T auch als Datenbanktabelle vorstellen, während AlfaLog selbst die Datenbank darstellt. AlfaLog kann daher aus vielen Topics T bestehen bzw. solche umfassen. In Figur 1 ist die Datenbank mit Bezugszeichen DB bezeichnet.

Ein Topic T ist demnach eine nur erweiterbare (append only), vollständig geordnete Folge von Datensätzen, geordnet durch die Zeit ihrer Erzeugung. Ein Topic T ist somit ein Append Only Log, wie einleitend bereits erläutert wurde.

Gemäß Figur 1 schreibt ein Producer P Datensätze 1, 2, 3, ... in ein Topic T, und ein Konsument oder Consumer K liest Datensätze 1, 2, 3, ... aus einem Topic T.

Wie bereits angedeutet, ist die völlig geordnete Abfolge der Datensätze 1, 2, 3, ... durch die Zeit ihrer Erzeugung eine Schlüsseleigenschaft und von entscheidender Bedeutung für verteilte Datensysteme. Dies führt bei der gezeigten Ausgestaltung der Erfindung zu einer wichtigen Designentscheidung: Um die zeitliche Abfolge der Datensätze 1, 2, 3, ... einzuhalten, darf es nur eine Quelle für ein Topic geben. In der Praxis ist es jedoch schwierig, die Anzahl der Erzeuger/Producer P zu begrenzen. Insbesondere in verteilten Systemen wird es regelmäßig eine große Anzahl von Erzeugern/Producern P geben, die Datensätze 1, 2, 3, ... erzeugen und schreiben.

Da es mehrere Quellen gibt, verwendet die AlfaLog-Datenbank DB einen Committer-Ansatz, um Linearität zu schaffen. Darüber hinaus verwendet AlfaLog zwei Arten von Datensätzen1, 2, 3, ...: Es gibt Rohdatensätze, die in ein sog. Raw Topic geschrieben werden, und es gibt genehmigte, geordnete Datensätze, die in ein sog. Offset Topic geschrieben werden. In Figur 1 sind bei RT1 und RT2 beispielhaft zwei solchen Raw Topics dargestellt, in die von den Producern P Datensätze 1, 2, 3, ... in der Reihenfolge ihrer Erzeugung geschrieben werden, hier die Datensätze 7 und 8. Ein sog. Committer oder Entscheider C liest die Einträge aus den Raw Topics RT1 und RT2, hier die Einträge 6 und 4 und überträgt sind in einer eindeutigen Reihenfolge in das Offset Topic OT. Dort liegen die Einträge dann vollständig geordnet vor, mit eindeutiger Reihenfolge. In dem gezeigten Beispiel wird zuerst Eintrag 4 in das Offset Topic OT geschrieben, später dann Eintrag 6. Durch die zeitliche Abfolge von Einträgen entsteht eine natürliche Reihenfolge. Allein diese Reihenfolge ist wichtig; die Zeit ist lediglich "Verursacher" dieser Reihenfolge.

Gemäß Figur 1 haben die Raw Topics RT1 und RT2 jeweils ihre eigene Datensatz-Reihenfolge. Diese Reihenfolge ist jedoch unwichtig. Allein der Committer C als alleiniger Producer des Offset Topics OT bestimmt die Reihenfolge der Einträge im Offset Topic OT. Eintrag 4 und Eintrag 6 sind die letzten Einträge in den Raw Topics RT1 und RT2 und kommen mit zeitlichem Versatz beim Committer C an. Das bestimmt ihr neue, eindeutige Ordnung.

Im lokalen Fall, d.h. bei nur einem Teilnehmer erscheint dies nicht besonders sinnvoll zu sein. AlfaLog ist jedoch als ein verteiltes Log (verteilte Datenbank) konzipiert. Dieser Umstand setzt vorteilhafterweise voraus, dass jeder Client, also insbesondere jeder neue Client (also jeder (neue) Teilnehmer), einen sog. Raw Record für jeden anderen Client erstellt (Raw Topics enthalten sog. Raw Records (also Roh-Einträge).

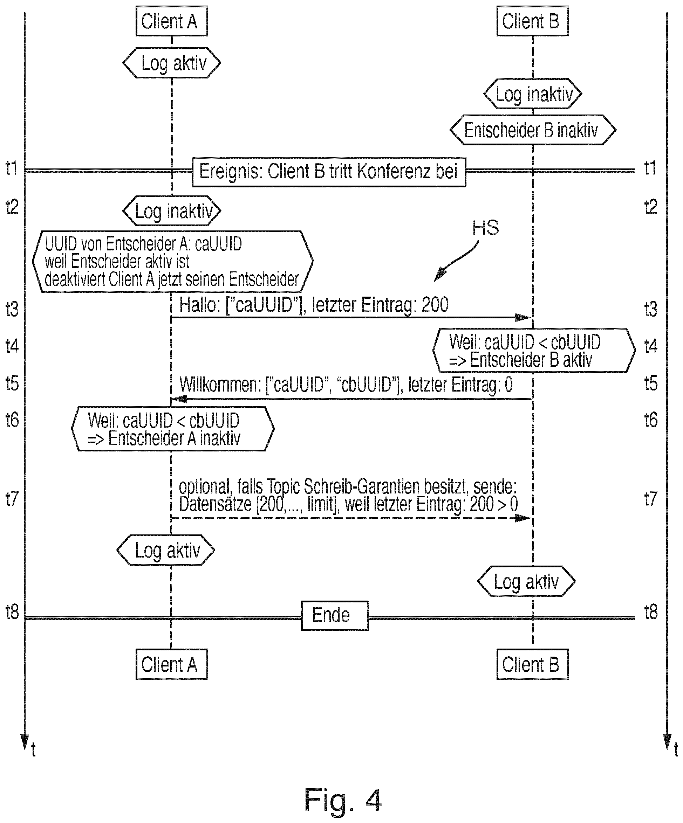

Wie bereits erläutert, besteht jedes Topic eigentlich aus zwei Topics (Raw Topic RT und Offset Topic OT). Zwischen den beiden Topics RT, OT existiert der Committer C, der die Daten aus dem Raw Topic RT in das Offset Topic OT überträgt. Ein Topic T besteht demnach gemäß speziell Figur 2 aus den drei Basisklassen Committer C, Raw Topic RT und Offset Topic OT (vgl. auch Figur 1). Das Offset Topic OT enthält die übertragenen Datensätze und die eigentlichen Daten. Das Raw Topic ist eine Teilnehmer-Datenaufnahmestruktur nach Art einer Datensenke. Es sei noch einmal darauf hingewiesen, dass es erfindungsgemäß in dem verteilten System (Cluster aus mehreren Teilnehmern) nur genau einen Committer C für das Offset Topic OT gibt. Das heißt, das Offset Topic OT hat nur einen Erzeuger, nämlich den Committer C, der durch eine eindeutige ID oder UUID, hier: A13232AEB35, eindeutig identifizierbar (und ermittelbar) ist. Darauf wird weiter unten anhand der Figuren 4 bis 6 noch genauer eingegangen.

Wie in Figur 2 gezeigt, schreiben mehrere Erzeuger (Producer) P1-P3 in ein Raw Topic RT, und der Committer C überträgt nach Maßgabe durch einen sog. Offset-Manager OM die Daten aus dem Raw Topic RT in das Offset Topic OT, wo sie von mehreren Konsumenten K1, K2 gelesen werden. Der Offset Manager zählt insbesondere die Anzahl der Einträge im Offset Topic OT. Die Einträge werden durchnummeriert, und diese Nummer heißt Offset. Es ist nicht sinnvoll, die Raw Topic-Einträge zu zählen oder durchzunummerieren, da sie ,chaotisch` sind.

In diesem Kontext sind Schreibgarantien für Datensätze, wie "höchstens einmal", "genau einmal" und "mindestens einmal" wichtig für die Entwicklung von Funktionen. Jeder Erzeuger P1-P3 hat eine eindeutige Identifizierung oder ID ("uuid") und verwaltet eine Sequenzliste, wonach jedem erzeugten Datensatz beispielsweise eine Zahl zugeordnet wird. Jedem Datensatz wird also eine Sequenz (Zahl oder Nummer) und die ID des jeweiligen Erzeugers P1-P3 zugewiesen. Jeder Erzeuger P1-P3 ist in der Regel auch ein Konsument K1, K2 des Offset Topics OT.

Mit Hilfe der Erzeuger-ID und der Sequenznummer können Schreibgarantien implementiert werden. Beispielsweise kann ein Erzeuger P1 als Konsument (z.B. K1) das Offset Topic OT dahingehend überwachen, ob ein bestimmter, von ihm selbst erzeugter Datensatz, den er anhand der Erzeuger-ID und der Sequenznummer erkennen kann, in dem Offset Topic OT erscheint. Falls dies nicht der Fall ist, z.B. nach einer gewissen Zeit, kann z.B. in dem Fall "mindestens einmal" dafür gesorgt werden, dass der betreffende Erzeuger P1 den speziellen Datensatz erneut in das Raw Topic RT einstellt, damit der Entscheider C ihn in das Offset Topic OT übertragen kann.

Die erforderlich Datenkonsistenz kann im Rahmen der Erfindung folgendermaßen erreicht werden: Nachfolgend werden die Erzeuger durch Clients verkörpert. Ein Client - auch clientseitige Anwendung, Clientanwendung oder Clientprogramm genannt - bezeichnet ein Computerprogramm, das auf dem Endgerät eines Netzwerks (hier also eines Teilnehmers) ausgeführt wird. Man nennt zuweilen auch ein Endgerät selbst, das Dienste von dem Netzwerk abruft, Client. Dabei wird zwischen Remote-Clients RC1-RC3 und dem (lokalen) Committer-Client CC unterschieden. Der Committer-Client CC ist dasjenige Programm, welches im Rahmen der Erfindung den Committer C bereitstellt (dazu genauer weiter unten). Jeder Remote-Client RC1-RC3 erstellt einen Erzeuger P1-P3 auf dem aktiven Committer-Client CC für das dortige Raw Topic RT (vgl. Figur 2). Datensätze, die in das lokale Raw Topic RT1'-RT3' der einzelnen Remote-Clients RC1-RC3 geschrieben werden, werden automatisch auch in das Raw Topic RT des aktiven Committer-Clients CC geschrieben. Dabei kann bzw. wird die zeitliche Abfolge der Datensätze bei jedem Client RC1-RC3, CC anders sein, während allein die vom Committer C erzeugte Reihenfolge im Offset Topic OT maßgeblich ist. Streng genommen erzeugt jeder (Remote-) Client auf jedem anderen Client einen Erzeuger. Allerdings ist regelmäßig nur der betreffende Erzeuger auf dem gerade aktiven Committer sinnvoll. Deshalb sind die anderen Erzeuger vorzugsweise ausgeschaltet (nicht aktiv).

Jeder Client, der zu einem Topic T beiträgt, hat seinen eigenen Committer C1-C3, C, aber von diesen Committern ist zu jeder Zeit nur einer aktiv. Jeder Committer C1-C3, C hat bevorzugt eine eindeutige Identifizierung (uuid). Für alle Clients mit inaktiven Committern (alle Clients außer Committer-Client CC) ist die direkte Verbindung zwischen Raw Topic und Offset Topic unterbrochen.

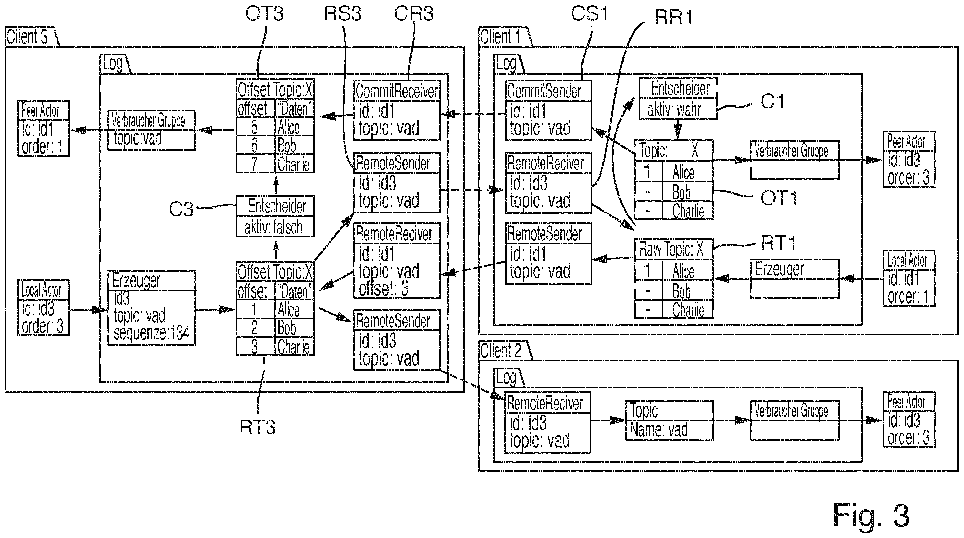

Dies ist exemplarisch in der Figur 3 genauer dargestellt, wo beispielhaft zwei Clients (Client 1, Client 3) detailliert gezeigt sind und wo es für Client 3 heißt: "Entscheider, aktiv: falsch" (C3). Für Client 1 heißt es dagegen: "Entscheider, aktiv: wahr" (C1). Alle Clients schreiben nur in ihr eigenes lokales Raw Topic RT1, RT3. Die Datensätze werden dann durch RemoteSender RS3 und RemoteReceiver RR1 in das Raw Topic RT1 des aktiven Committers C1 (Client 1) kopiert. Gleiches gilt ggf. für Client 2 entsprechend (nicht gezeigt). Nur der aktive Committer C1 schreibt Daten in sein Offset Topic OT1. Dabei schreibt er auch die von den anderen Clients erzeugten Datensätze aus seinem Raw Topic RT1 in sein Offset Topic OT1 und bestimmt dadurch die Reihenfolge aller Datensätze. Die vom aktiven Committer geordneten (bestätigten oder freigegebenen) Datensätze werden vom Offset Topic OT1 über CommitSender CS1 und CommitReceiver CR3 an die Offsets Topic OT3 der anderen Clients verteilt, und sind in der Folge allein maßgebend. Dies ist in Figur 3 nur für den Client 3 explizit dargestellt.

Ein wichtiger Aspekt der Erfindung ist die Aushandlung (Festlegung) des aktiven Committers. Dabei ist zu beachten, dass die Lebensdauer eines Committers in einem Browser in der Regel nur Sekunden beträgt. Im Gegensatz zu serverbasierten Backend-Systemen ist dies eine sehr kurze Zeitspanne. Deshalb sind Committer, die durch Browseranwendungen bereitgestellt werden, auch nicht stabil. Es muss im Rahmen der Erfindung von einem ständigen Wechsel des Committers ausgegangen werden.

In einem sich ständig verändernden System müssen konstante Systemzustände gefunden werden, damit das System funktionieren kann. Das beschriebene AlfaLog-System kann sich grundsätzlich in zwei Zuständen befinden:
- Zustand 1: Der Committer ist ausgewählt. Dieser Committer übernimmt die Ordnung der Datensätze.
- Zustand 2: Committer-Verhandlungsprozess. Ein aktueller Committer ist (noch) nicht ausgewählt und muss (neu) bestimmt werden.

Die Zustandsänderungen von AlfaLog (der verteilten Datenbank) werden durch Clients ausgelöst, also Teilnehmer bzw. deren Programme, die einer Konferenz beitreten oder diese verlassen oder ihre Rolle (Sprecher, Zuhörer). Jedes dieser Ereignisse bewirkt einen Übergang in den zweiten Zustand und anschließend einen (neuen) ersten Zustand.

Im Rahmen einer bevorzugten Ausgestaltung bedeutet dies, dass jedes Mal, wenn eine neue WebRTC-Verbindung (zwischen zwei Clients) aufgebaut oder abgebrochen wird, der Prozess der Committer-Aushandlung (Zustand 2) neu gestartet wird. Dies ist vorzugsweise völlig unabhängig davon, ob ein bereits laufender Prozess abgeschlossen wurde oder nicht.

Ein Beispiel für einen solchen Vorgang ist, wenn zwei Clients in einer Konferenz sind, dann ein dritter Client der Konferenz als (neuer) Committer beitritt und die Committer-Aushandlung beginnt, woraufhin (kurz darauf) ein vierter Client als (wiederum neuer) Committer der Konferenz beitritt, sodass die Committer-Aushandlung erneut beginnt und die bereits laufende Committer-Aushandlung abgebrochen wird.

AlfaLog wechselt somit ständig zwischen den beiden genannten Zuständen hin und her. Nachfolgend soll insbesondere erläutert werden, wie die Übergänge zwischen den beiden Zuständen ablaufen können.

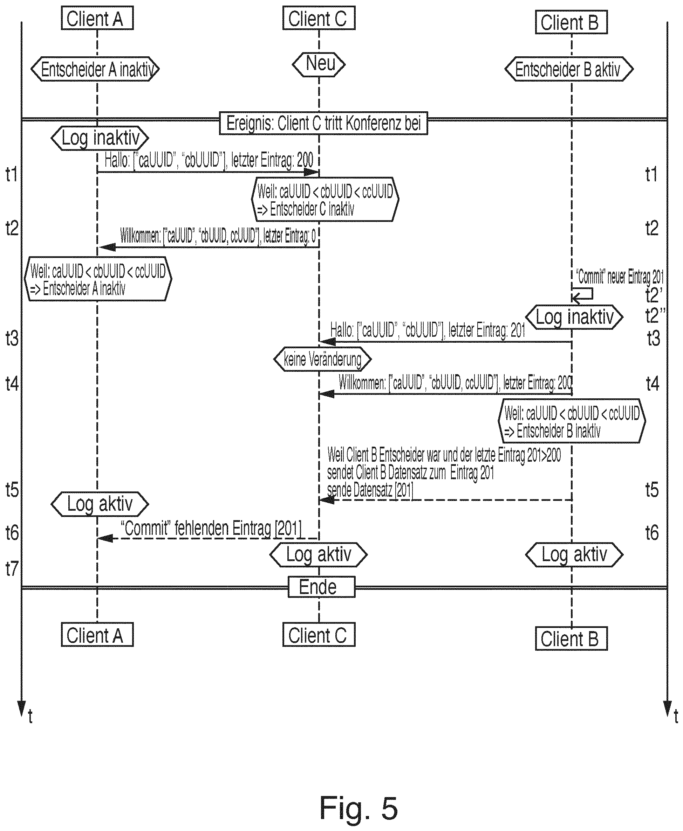

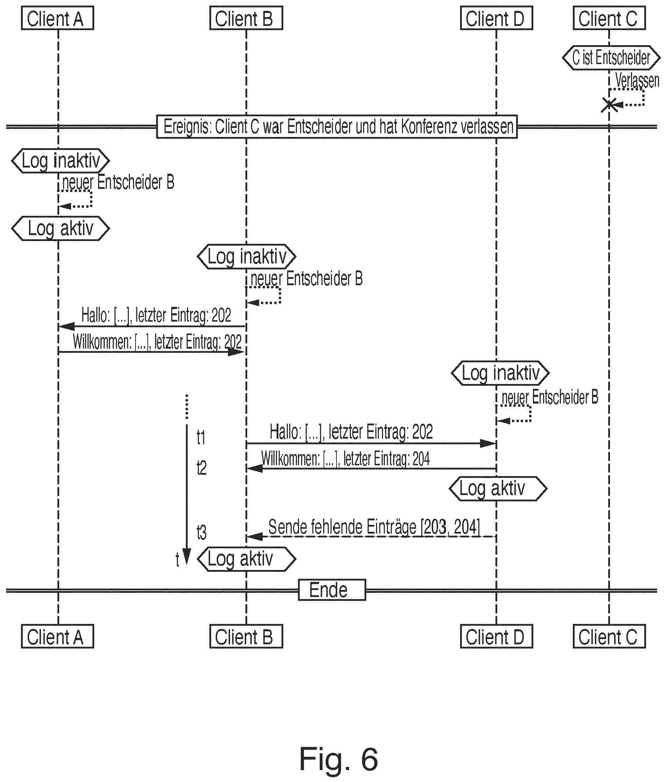

Ein Übergang zwischen den beiden Systemzuständen wird bevorzugt immer dann eingeleitet, wenn sich auf dem Teilnehmer- bzw. Client-Cluster etwas ändert. Dabei handelt es sich im Wesentlichen um zwei Ereignisse, nämlich wenn sich ein Client neu mit dem Cluster verbindet (Figur 4 und Figur 5) bzw. wenn ein Client den Cluster verlässt (Figur 6). Jeder einzelne Client erkennt diese Änderungen selbstständig und vorzugsweise unabhängig von den anderen Clients.

Wenn ein Client einen neuen Client erkennt oder den Fortgang eines Clients feststellt, schließt dieser Client sofort die aktive Verbindung zum Committer, vgl. Figur 3. Es können also keine Datensätze mehr übertragen werden. Das AlfaLog steht für den betreffenden Client still. Zu einem jeweiligen späteren Zeitpunkt steht AlfaLog auch für alle anderen Clients still, da sie die genannte Änderung im Cluster ebenfalls registrieren. Durch die hiermit einhergehende Zeitverschiebung bzw. Zeitdifferenz befindet sich AlfaLog in einem inkonsistenten Datenzustand, denn einige Clients haben womöglich mehr bestätigte, d.h. vom vorherigen Committer freigegebene Datensätze empfangen als andere.

Sobald ein Client seine Committer-Verbindung deaktiviert hat, startet er den Committer-Verhandlungsprozess, der den Übergang in den zweiten Systemzustand einleitet.

Wie bereits angedeutet wurde, wählt jeder Client den aktiven Committer unabhängig von den anderen Clients aus, wobei das Ergebnis einheitlich sein sollte. Um für alle Clients das gleiche Ergebnis zu erzielen, benötigt jeder Client eine gleiche Liste mit den potentiellen Committern aller verfügbaren Clients und wendet dann eine eindeutige Ordnungsrelation auf die Menge der möglichen UUID (Identifizierungen) der Committer an. Mit Hilfe dieser Ordnungsrelation kann ein Committer aus der Liste von Committern durch jeden Client eindeutig und autonom ausgewählt werden.

Die Ordnungsrelation muss insbesondere die folgenden mathematischen Kriterien erfüllen: reflexiv, transitiv, antisymmetrisch und stark verbunden (engl.: "strongly connected"), früher auch "total" genannt. Allgemein sind Ordnungsrelation in der Mathematik Verallgemeinerungen der "kleiner-gleich"-Beziehung. Sie erlauben es, Elemente einer Menge miteinander zu vergleichen.

Jeder Committer hat bevorzugt eine eindeutige Identifizierung oder UUID. Die genannte Ordnungsrelation ermöglicht es, die UUlDs in eine eindeutige Reihenfolge zu bringen und den aktiven Committer auszuwählen, z.B. den ersten aus der genannten Reihenfolge.

Das Ereignis, wonach ein neuer Client einer Konferenz beitritt, wird durch die Initialisierung wenigstens einer neuen Datenverbindung, insbesondere WebRTC-Verbindung, ausgelöst. Jeder Client stellt eine Peer-to-Peer-Verbindung zu jedem anderen Client im Cluster her. Ein neuer Client stellt also nacheinander eine Verbindung zu jedem anderen Client im Cluster her. Aus diesem Grund wissen einige Clients im Cluster früher als andere, dass ein neuer Client hinzugekommen ist. Dies ist ein wichtiger Punkt, den es zu berücksichtigen gilt.

Auf das Ereignis des Beitritts und des Verlassens selbst soll hier nicht näher eingegangen werden. Der Datenkanal der Peer-to-Peer-Verbindung wird nach seiner Schaffung zum Austausch von Daten zwischen den betreffenden Clients verwendet.

Wenn ein Client einem bestehenden Cluster beitritt, kann er dort entweder die Rolle des (aktiven) Committers übernehmen oder nicht. Es ist rein zufällig bzw. vorzugsweise nur von der UUID des betreffenden Clients abhängig, ob der Committer des neuen Clients der (aktive) Committer wird. Dies ist ein wichtiger Punkt, denn es gibt im Rahmen der Erfindung keine zentrale Instanz, die dauerhaft existiert und als Committer fungieren oder diesen festlegen könnte. Wie bereits erwähnt, werden Daten nur von Peer zu Peer ausgetauscht.

Wenn ein Client als erster Client in der Konferenz einer Konferenz beitritt bzw. diese eröffnet und noch kein anderer Client in der Konferenz ist, ist sein Committer zunächst inaktiv. Nach einer gewissen Zeit und wenn niemand sonst der Konferenz beigetreten ist, kann sein Committer vorzugsweise automatisch aktiviert werden.

Bei zwei Clients in der Konferenz beginnt unabhängig davon, ob der erste Client seinen Committer bereits aktiviert hat oder nicht, mit dem Eintritt eines zweiten Clients in die Konferenz ein Committer-Wahlprozess mit einem Begrüßungs-Handshake, wie dies in der Figur 4 gezeigt ist (erster Client: Client A, zweiter Client: Client B).

Gemäß Figur 4 tritt Client B zur Zeit t = t1 in die Konferenz ein, die zuvor nur aus Client A bestand, dessen Committer aktiv war. Zur Zeit t2 deaktiviert Client A seinen Committer, und zur Zeit t3 sendet Client A den Begrüßungs-Handshake HS an den Client B.

Es spielt keine Rolle, wer den Handshake HS initiiert. Wichtig ist, dass beide Clients zuvor ihr jeweiliges Log (die Datenbank) deaktivieren. Dies schafft einen stabilen Datenzustand. Jeder Client sendet alle ihm bekannten Committer-UUIDs und seinen letzten Commit-Offset. Der Commit-Offset zeigt an, welche (fortlaufende) Nummerierung der letzte Eintrag in dem Offset Topic des betreffenden Clients aufweist. Client A sendet die genannten Informationen beispielsweise in der "Hallo"-Nachricht gemäß Figur 4 zur Zeit t3. "caUUID" bezeichnet seine UUID, der Committ-Offset ist 200. Client B antwortet hierauf zur Zeit t5 mit einer "Willkommen"-Nachricht (beinhaltend seine eigene ID "cbUUID" und seinen Committ-Offset = 0). Davon ausgehend bestimmt jeder Client für sich den nächsten Committer durch Anwendung der genannten Ordnungsrelation auf die IDs "caUUID" und "cbUUID" und aktiviert sein Log. Vorliegend weiß Client B schon zur Zeit t4 < t5, dass er der neue Committer sein wird ("Entscheider B aktiv"), denn die eindeutige Ordnungsrelation ergibt caUUID < cbUUlD. Client A bestimmt zur Zeit t6, dass er nicht der neue Committer sein wird ("Entscheider A inaktiv").

Es spielt keine besondere Rolle, wann die Clients ihre Logs jeweils wieder aktivieren. Bei Bedarf sorgen die Schreibgarantien des Topics dafür, dass die Datensätze synchronisiert werden, also die Offsets ausgetauscht werden. Dies bedeutet beispielsweise konkret, dass Client A zur Zeit t7 seine Offset Topic-Einträge bis zum Eintrag 200 an den Client B sendet, wenn seine Schreibgarantie dies vorschreibt (z.B. "mindestens einmal", "genau einmal", ...), weil Client B keinerlei Einträge besitzt. Zum Zeitpunkt t8 ist die Verhandlung abgeschlossen.

Figur 5 illustriert den Fall, wenn sich mehr als zwei Clients in der Konferenz befinden.

Wenn sich bereits mehr als ein Client in der Konferenz befindet, hier die Clients A und B, findet der Begrüßungs-Handshake zwischen dem neuen Client und allen bestehenden Clients statt, siehe Zeitpunkte t1, t2 und t3, t4. Dieser Fall unterscheidet sich nicht wesentlich vom vorherigen Fall (vgl. Figur 4).

Es kann jedoch vorkommen, dass verschiedene Clients unterschiedliche Commit-Status haben. Das liegt daran, dass nicht alle Clients gleichzeitig über neue Clients benachrichtigt werden. Vorliegend "committed" Client B (der "alte" aktive Committer) zur Zeit t2' noch einen neuen Eintrag mit laufender Nummer 201, bevor er deaktiviert wird (Zeitpunkt t2").

Zu beachten ist, dass der neue aktive Committer von Client C, bevor er zur Zeit t7 aktiviert wird, noch den letzten Commit von Client B synchronisiert. Unter "Commit" versteht man insbesondere das Schreiben eines neuen Datensatzes (vorzugsweise mitsamt einem Zusatz, der es erlaubt, den erzeugenden Client und eine Sequenznummer des Datensatzes zu erkennen) in das Offset Topic durch den Committer-Client und anschließendes Freigeben bzw. Senden an die Remote-Clients, vgl. Figur 3, wodurch der betreffende Eintrag allen Clients zur Verfügung gestellt wird, wie zuvor erläutert.

Dazu sendet zunächst Client B zur Zeit t5 seinen Eintrag mit Nummer 201 an Client C, den neuen Committer, weil dieser mit seiner "Willkommen"-Nachricht (zur Zeit t4) angezeigt hatte, dass sein letzter Eintrag die Nummer 200 besaß. Zur Zeit t6 "committed" der neue Committer-Client Client C den betreffenden Eintrag 201 gezielt an den Client A, weil dieser zur Zeit t1 ebenfalls angezeigt hatte, dass sein aktueller Offset erst bei 200 stand.

Wenn gemäß Figur 6 ein Client (hier Client C) die Konferenz verlässt, ist nur derjenige Fall wirklich interessant, dass der ausscheidende Client der aktive Committer war. In diesem Fall muss der neue Committer erneut eine Datensynchronisation durchführen, wie oben anhand von Figur 5 bereits erläutert. Vorliegend zeigt Client D zur Zeit t2 an, dass er bei Offset 204 steht und übermittelt zur Zeit t3 die noch fehlenden Einträge zu den Offsets 203 und 204 an den neuen Committer-Client Client B, der zur Zeit t1 angezeigt hatte, dass sein Offset (nur) bei 202 stand.

Wenn ein Client die Konferenz verlässt, ermitteln die übrigen Clients den neuen Committer selbständig und unabhängig voneinander, wie erläutert. Dennoch initiiert der neue Committer bevorzugt einen Handshake mit jedem anderen Client. Er tut dies, um alle bereits erfolgten Commits zu sammeln und zu verteilen, wie eben erläutert.

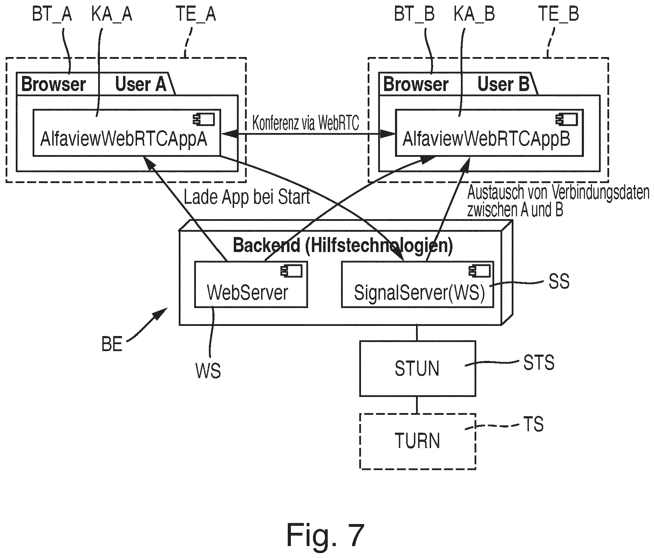

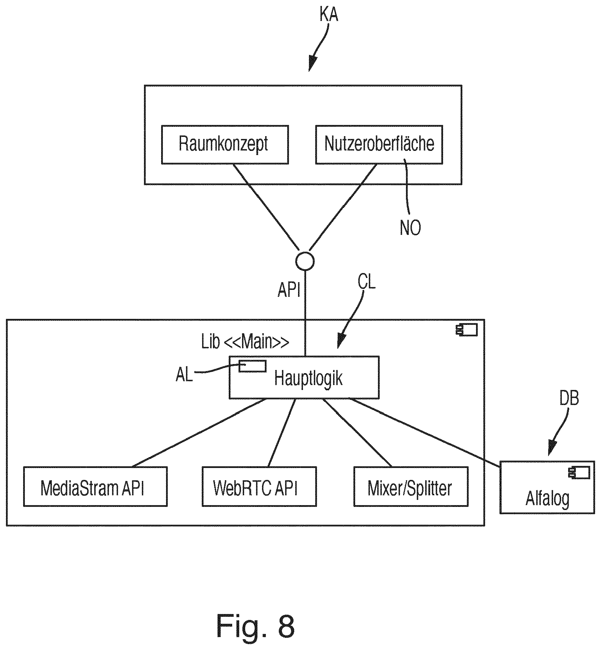

Figur 7 zeigt einen möglichen Aufbau der erfindungsgemäßen computerbasierte Konferenz-Anwendung. Diese umfasst (für jeden User oder Nutzer bzw. Teilnehmer A, B, ...) eine Konferenz-Applikation KA_A, KA_B mit Nutzeroberfläche, welche Konferenz-Applikation KA_A, KA_B auf jedem Teilnehmer-Endgerät TE_A, TE_B in einem betreffenden Browser-Tab BT_A, BT_B ausgeführt wird oder ausführbar ist. Diese Konferenz-Applikation KA_A, KA_B ist in Figur 7 auch als "Alfaview WebRTC App" bezeichnet; der Zusatz "A", "B" bezeichnet den User. Die Konferenz-Anwendung umfasst weiterhin eine auf jedem Teilnehmer-Endgerät ausgeführte oder ausführbare Hauptapplikation (siehe Figur 8) zum Anbinden der jeweiligen Konferenz-Applikation an die weiter oben erläuterte verteilte Datenbank (siehe Figur 8), insbesondere zum Schaffen von WebRTC-Datenkanälen zwischen den Usern. Die Datenbank ist somit auch Teil der Konferenz-Anwendung, vgl. weiter unten Figur 8. Die User A, B konferieren via WebRTC (Doppelpfeil "Konferenz via WebRTC" zwischen den Endgeräten TE_A und TE_B bzw. den Konferenz-Applikationen KA_A, KA_B.

Bezugszeichen BE bezeichnet das sog. Backend, welches Hilfstechnologien umfasst, die trotz Dezentralisierung sehr hilfreich sein können.

Bezugszeichen WS bezeichnet einen Webserver. Die Alfaview WebRTC App ist eine sog. Single Page Web App. Beim Aufruf der entsprechenden URL im Browser wird die App einmalig und komplett vom Webserver WS in den Browser BT_A, BT_B geladen (Pfeile "Lade App bei Start"). Danach ist keine Webserver-Verbindung mehr nötig.

Es sei hier angemerkt, dass aus einer Single Page Web App bei entsprechender Weiterbildung leicht eine sog. Progressive Web App erstellt werden kann. Eine Progressive Web App funktioniert wie eine Desktop App oder eine Mobile App. Die App wird dann einmalig auf den Desktop oder Mobilgerät geladen und nur noch regelmäßig aktualisiert.

Bezugszeichen SS bezeichnet einen sog. Signal Server (Web Socket). Eine im Browser ausgeführte Anwendung hat keine öffentlich bekannte IP-Adresse. Sie ist anonym und somit unauffindbar. Damit zwei Browser-Anwendungen eine serverfreie Verbindung aufbauen können, benötigen sie einen Vermittler, über den sie Verbindungsdaten austauschen können (Pfeil "Austausch von Verbindungsdaten zwischen A und B"). Das zugrunde liegende Konzept heißt Signalling. Der Signal Server SS fungiert als ein solcher Vermittler.

Bezugszeichen STS bezeichnet einen sog. STUN-Server. Dieser kann vorgesehen sein zur Ermittlung von Verbindungsadressen, insbesondere IP- und/oder Port-Adressen der User/Teilnehmer, und/oder zum Schaffen von Löchern in bei den Teilnehmern ggf. vorhandene Firewalls.

Bezugszeichen TS bezeichnet einen optionalen TURN-Server, der dazu ausgebildet ist, als Mittler einzuspringen, um Audio- und Videoströme zu übertragen, vorzugsweise verschlüsselt, wenn die technischen Voraussetzungen für eine Konferenz nicht gegeben sind. Höchst vorzugsweise ist die Kommunikation mit dem TURN-Server immer Ende-zu-Ende verschlüsselt. Der Server (TURN-Server) kann folglich nicht mitlesen.

Die technischen Voraussetzungen für eine Konferenz sind insbesondere dann nicht gegeben, wenn ein Teilnehmer hinter einer starken Firewall sitzt, weil dann eine Peer-to-Peer-Verbindung nicht möglich ist. Als Ersatz wird dann bevorzugt versucht, eine klassischen Client-Server-Client Verbindung aufzubauen, wobei der Server hier der TURN-Server ist. Die Client-Server-Client Verbindung wird von Firewalls in der Regel toleriert. Hierbei handelt es sich um ein Standardverfahren von WebRTC.

Figur 8 zeigt bei Bezugszeichen KA nochmals die Konferenz-Applikation aus Figur 7 mit Nutzeroberfläche NO.

Die Konferenz-Applikation oder Web-Konferenz-Anwendung ("Alfaview WebRTC App") KA ist vorzugsweise in Typescript geschrieben und umfasst gemäß Ausführungsbeispiel in Figur 8 drei wesentliche Komponenten:
- Die Anwendung mit der Nutzeroberfläche NO. Die Nutzeroberfläche NO ist losgelöst von der eigentlichen Konferenz-App, also insbesondere der Datenbank ("AlfaLog"; siehe unten). Die Nutzeroberfläche NO ist somit leicht austausch- und veränderbar. Das Software-Design kann so angelegt sein, dass die Nutzeroberfläche NO eine Komponente ist.
- "Lib": Die Hauptlogik oder Hauptapplikation CL befindet sich in "Lib". Hier befindet sich auch die Anbindung an die WebRTC API und eine MediaStream Browser API. Derartige APIs werden von den Browser-Herstellern ausgegeben und können von Entwicklern verwendet werden. Speziell WebRTC ist im Browser in der Regel auch in Form einer API ausgebildet. Die genannte MediaStream Browser API ermöglicht es, die Laptop-Kamera einzuschalten. Browser weisen eine Vielzahl solcher APIs auf, auf die in "Lib" zugegriffen werden kann. Dies ist dem Fachmann an sich bekannt. Auch weitere Komponenten, wie Mixer und Splitter, befinden sich hier, wie dargestellt. Mit dieser Komponente könne Videos (Video- und Audiodaten) von verschiedenen Teilnehmern zu einen Media-Stream gemischt werden, welcher Stream beim Empfänger wieder aufgesplittet wird.
- AlfaLog: AlfaLog ist die erfindungsgemäße dezentrale Datenbank DB basierend auf einem Append Only Log, wie oben beschrieben (vgl. Figur 1). AlfaLog wird benötigt, um den aktuellen Zustand der Konferenz bzw. eine Cluster-Topologie über alle Konferenzteilnehmer zu verteilen. AlfaLog ist somit der eigentliche Serverersatz.

Bevorzugt umfasst die Konferenz-Anwendung KA einen schematisch dargestellten Algorithmus AL, vorzugsweise in der Hauptapplikation CL, der dazu ausgebildet ist zu entscheiden, welche Teilnehmer untereinander Video- und/oder Audio-Ströme übertragen. Dazu kann jedem Teilnehmer eine Nummer zugeordnet sein, insbesondere beginnend bei Eins und aufsteigend, welche Nummern vorzugsweise in Abhängigkeit von einer zeitlichen Reihenfolge des Einwählens eines Teilnehmers in den Cluster, d.h. in die Konferenz vergeben werden. In der Konferenz-Applikation kann für jeden Teilnehmer festgelegt oder festlegbar sein, zu welchem anderen Teilnehmer ein Video-/Audio-Strom zu öffnen ist, wobei sich die einzelnen Teilnehmer über die Datenkanäle untereinander koordinieren, vorzugsweise entsprechend der aus der Datenbank DB bekannten Cluster-Topologie.

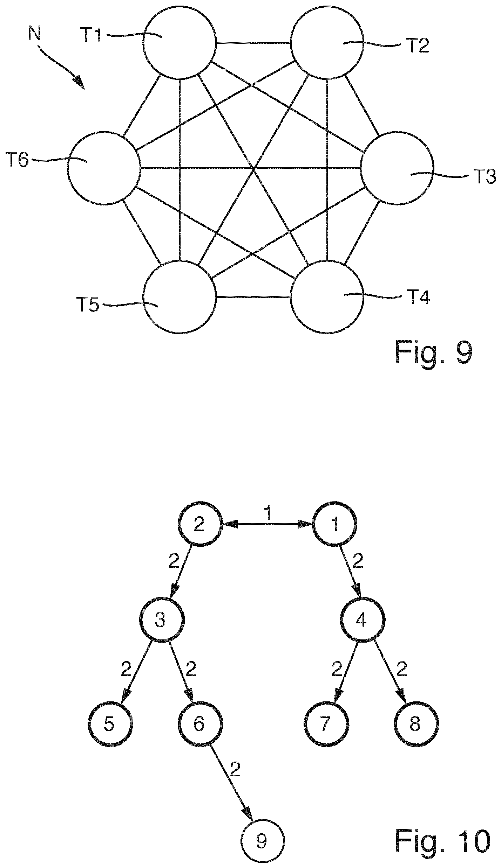

In der Alfaview Web RTC App wird bevorzugt beim Aufbau der Konferenz zu jedem anderen Teilnehmer der Konferenz ein WebRTC-Datenkanal geöffnet. Ein WebRTC-Datenkanal ist ressourcenarm und wird benutzt zum Übertragen von (Text-)Nachrichten. Jeder Teilnehmer kann nun zu jeden Teilnehmer Nachrichten senden. Über die Datenkanäle existiert ein voll verbundenes Netz N zwischen den Teilnehmern T1-T6, wie es in der Figur 9 schematisch gezeigt ist.

Zu einer bestehenden Datenkanal-, insbesondere WebRTC-Verbindung, können dynamisch Video- und/oder Audio-Ströme hinzufügbar und/oder davon entfernbar sein, wobei jeder Teilnehmer einen sendenden und einen empfangenden Transceiver besitzt, zu welchem Zweck die Anwendung, insbesondere die Hauptapplikation, dazu ausgebildet ist, die betreffenden Video- und/oder Audio-Strom-Transceiver auf beiden Teilnehmer-Seiten des betreffenden Datenkanals bei Bedarf zu öffnen oder zu schließen.

Das Übertragen von Video- und Audio-Strömen ist allerdings sehr ressourcenintensiv. Ein voll verbundenes Netz entsprechen Figur 9 ist hier nicht möglich. Benötigt wird deshalb der bereits erwähnte Algorithmus AL (Figur 8), der entscheidet, welche Teilnehmer untereinander Video/Audio-Streams übertragen. Dafür bekommt bevorzugt jeder Teilnehmer eine Nummer zugeordnet, wie bereits erwähnt wurde, beginnend bei Eins und aufsteigend. Dies ist in der Figur 10 schematisch dargestellt. Die Nummern werden bevorzugt nach der zeitlichen Reihenfolge des Einwählens eines betreffenden Teilnehmers in die Konferenz vergeben. Der erste Teilnehmer in der Konferenz erhält so die Nummer Eins und so weiter. Abhängig von seiner Nummer kann jeder Teilnehmer erkennen, zu welchem anderen Teilnehmer ein Audio/Video Stream geöffnet werden muss. Dabei können sich die einzelnen Teilnehmer über die bestehenden Datenkanäle untereinander koordinieren.

Alfalog kann dazu verwendet werden, jedem Teilnehmer eine eindeutige natürliche Zahl zuzuordnen, beginnend insbesondere bei 1. Dann kann man beispielsweise festlegen, dass Teilnehmer 1-3 ihre Videos und Audios teilen. Und man kann festlegen, dass Teilnehmer 4 nur zuschauen darf. Weiter erhält z.B. Teilnehmer 4 das Video von Teilnehmer 1. Teilnehmer 5 darf auch nur zuschauen und erhält das Video von Teilnehmer 2, usw. Die Nummern können also dazu verwendet werden festzulegen, mit wem ein Teilnehmer in einer gegebenen Konferenz-Topologie seine Video- und Audio-Daten teilen muss.

In der Figur 10 existieren insgesamt neun Teilnehmer (entsprechend nummeriert). Die Teilnehmer 1 und 2 sind sog. VIP-User (aktive Teilnehmer, die Video/Audio-Streams senden und empfangen). Die anderen sieben Teilnehmer mit den Nummern 3 bis 7 sind sog. Viewer als passive Teilnehmer. Video- und Audiodaten werden nur von den VIPs an alle Teilnehmer versendet. Die VIPs 1 und 2 mischen alle Videos, die sie empfangen (Videos von 1 und 2) und senden den resultierenden Mixed Stream (Media Stream) an ihre Viewer (Teilnehmer 3-7). Passive Viewer können per Knopfdruck in der App (insbesondere über die Nutzeroberfläche NO, Figur 8) in den Vordergrund treten und (kurzzeitig) die Rolle eines aktiven VIPs übernehmen, der seinerseits zu einem passiven Viewer wird. Die entsprechenden Informationen werden in der AlfaLog-Datenbank abgelegt und stehen somit allen Teilnehmern zur Verfügung.

Dieser letzte Aspekt ist der bevorzugte Hauptanwendungsfall von AlfaLog. In AlfaLog werden die Nummern (siehe oben) der Teilnehmer gespeichert. Jeder Teilnehmer kennt dann seine Nummer und die der anderen Teilnehmer. AlfaLog ist konsistent, ohne einen Backend-Server zu benötigen. Somit weiß jeder Client, von wem er Daten erhält bzw. von wem nicht und zu wem er Daten senden muss, wie schon erläutert.

Die Verbindung zwischen den VIPs verläuft jeweils Peer-to-Peer. Die Daten der VIPs werden gebündelt an die Viewer gesendet, wie oben bereits angesprochen.

Es ein beispielsweise angenommen, dass Teilnehmer 1, 2 und 3 VIPs sind. Dann stellt Teilnehmer 1 zu Teilnehmer 2 und zu Teilnehmer 3 eine Peer-to-Peer Verbindung her. Teilnehmer 3 stellt zu Teilnehmer 2 auch eine Peer-to-Peer Verbindung her, sodass alle drei miteinander verbunden sind. Teilnehmer 1 empfängt nun die Video- und Audiodaten von Teilnehmer 2 und Teilnehmer 3. Teilnehmer 1 kombiniert diese Daten mit seinem eigenen Daten (Video und Audio) zu einem Datenstrom (Media Stream) und sendet diesen zu Teilnehmer 4 (Viewer). Teilnehmer 4 splittet diesen einen Strom wieder in drei Video-/Audiodaten (Ströme) auf und zeigt diese an.

So kann die vorliegende Erfindung das Problem der Dynamik (das Speaker-Problem) in einem zeitlich veränderbaren Teilnehmer-Cluster in vorteilhafter Weise lösen. Konferenzen sind nämlich zeitlich sehr dynamische Konstrukte. Möchte beispielsweise ein Viewer zu einem VIP-Sprecher werden, muss er technisch betrachtet nur seine Nummer mit einem VIP-Teilnehmer tauschen, vgl. Figur 10. Dieser Wechsel hat aber Auswirkungen auf die benachbarten Teilnehmer. Wenn z.B. die Nummer Sechs mit der Nummer Zwei die Plätze tauscht und zu einem VIP-Teilnehmer wird, müssen auch andere Teilnehmer ihre Video- und Audio-Ströme neu aufbauen oder schließen. In dem betrachteten Fall sind dies die Teilnehmer Eins, Drei und Neun. Andere Teilnehmer sind wiederum nicht betroffen.

Der naive Ansatz, das Problem einfach durch direkte Kommunikation zwischen den einzelnen Beteiligten zu lösen, scheitert an zwei Dingen, nämlich einerseits der Komplexität, weil die Zahl der Sonderfälle die Zahl der konkreten Nutzfälle bei weitem übersteigt. Andererseits wächst aber vor allem die Anzahl der Text-Nachrichten, die ein Teilnehmer erhält, wenn ein neuer Teilnehmer hinzukommt, mit der Anzahl an Teilnehmer so stark an, dass die erforderliche Verarbeitung innerhalb von Millisekunden zum Problem wird und der empfangende Client zusammenbricht.

Durch die Nutzung der erfindungsgemäßen dezentralen Datenbank lässt sich das beschriebene Problem einfach lösen. In dem Beispielfall schriebt der Viewer mit der Nummer Sechs in seine Datensenke (Raw Topic) lediglich für sich selbst die neue Nummer Zwei und für die bisherige Nummer Zwei die neue Nummer Sechs. Alle Clients erhalten diesen Datensatz, wie oben detailliert erläutert wurde, über den Committ-Prozess und können nun darauf reagieren, um die Konferenz entsprechend abpassen, ohne hierfür in direkte Absprache mit den anderen Clients treten zu müssen.

Es sei abschließend betont, dass die beschriebene Anwendung für Konferenzen lediglich einen bevorzugten Anwendungsfall darstellt. Grundsätzlich ist die Erfindung nicht auf einen solchen Einsatz der beschriebenen Datenbank beschränkt.

## Patentansprüche

1. Dezentrale, auf eine Mehrzahl von Teilnehmer-Endgeräte verteilte Datenbank (DB), die aus einer Mehrzahl einzelner Teilnehmer-Datenbanken mit jeweiligen Datensätzen (1, 2, 3, ...) gebildet ist, welche Datensätze (1, 2, 3, ...) über Datenkanäle miteinander synchronisiert oder synchronisierbar sind, bei der
die Teilnehmer (T1-T6) zu einem dynamisch veränderlichen Cluster zusammengeschlossen sind;
einer der Teilnehmer (T1-T6) in dem Cluster als Entscheider (C) ausgewählt oder auswählbar ist, wobei insbesondere jede Veränderung des Clusters mit einer neuen Auswahl des Entscheiders (C) verbunden ist;
jeder der Teilnehmer (T1-T6) dazu ausgebildet ist, lokal Einträge in eine Teilnehmer-Datenaufnahmestruktur (RT) zu erzeugen und diese Einträge zumindest an den Entscheider (C) zur Freigabe zu übermitteln, wobei die Einträge insbesondere Informationen betreffend eine Topologie des Clusters enthalten;
der Entscheider (C) dazu ausgebildet ist, seine eigenen Einträge und die von den anderen Teilnehmern empfangenen Einträge sukzessive in seiner Teilnehmer-Datenbank (OT) anzuordnen und freizugeben; und
die anderen Teilnehmer (T1-T6) dazu ausgebildet sind, die freigegebenen Einträge entsprechend ihrer Anordnung in der Teilnehmer-Datenbank (OT) des Entscheiders (C) in ihre jeweilige eigene Teilnehmer-Datenbank zu kopieren, vorzugsweise sukzessive jeweils nach erfolgter Freigabe.

2. Verteilte Datenbank (DB) nach Anspruch, bei der
jeder einzelne Teilnehmer (T1-T6) eine eindeutige Identifizierung (UUID) besitzt und dazu eingerichtet ist, diese Identifizierung (UUID) den anderen Teilnehmern (T1-T6) in dem Cluster mitzuteilen, vorzugsweise bei jeder Veränderung des Clusters, wobei jeder einzelne Teilnehmer (T1-T6) dazu eingerichtet ist, anhand der ihm mitgeteilten Identifizierungen (UUID) den Entscheider (C) eindeutig zu bestimmen, zum Beispiel durch Anordnen der Identifizierungen (UUID) in einer eindeutigen Reihenfolge und Auswahl eines Teilnehmers (T1-T6) mit einer vorbestimmten Platzierung innerhalb dieser Reihenfolge als Entscheider (C), insbesondere des Erstplatzierten.

3. Verteilte Datenbank (DB) nach Anspruch 1 oder 2, bei der
die Teilnehmer-Datenbanken (OT) und/oder die Teilnehmer-Datenaufnahmestrukturen (RT) ausschließlich lokal auf dem jeweiligen Teilnehmer-Endgerät (TE_A, TE_B) gespeichert sind, insbesondere in einem Web-Browser (BT_A, BT_B).

4. Verteilte Datenbank (DB) nach einem der Ansprüche 1 bis 3, bei der
die einzelnen Teilnehmer-Datenaufnahmestrukturen (RT) als Speichermedien ausgebildet sind, in die nur geschrieben und aus denen nicht gelöscht werden kann.

5. Verteilte Datenbank (DB) nach einem der Ansprüche 1 bis 4, bei der
jeder Eintrag wenigstens einen Zusatz umfasst, durch den er eindeutig identifizierbar ist, insbesondere hinsichtlich des ihn erzeugenden Teilnehmers (T1-T6) und der zeitlichen Position seiner Erzeugung.

6. Verteilte Datenbank (DB) nach einem der Ansprüche 1 bis 5, bei der wenigstens eine Anzahl der Teilnehmer (T1-T6) dazu eingerichtet ist, die in die jeweilige Teilnehmer-Datenbank (OT) kopierten Einträge laufend zu überwachen und einen dort nicht enthaltenen eigenen Eintrag erneut zur Freigabe an den Entscheider (C) zu übermitteln.

7. Verteilte Datenbank (DB) nach einem der Ansprüche 1 bis 6 bei Rückzug auf Anspruch 2, bei der
die Teilnehmer (T1-T6) dazu ausgebildet sind, zusammen mit oder zusätzlich zu der Identifizierung einen Stand ihrer jeweiligen Teilnehmer-Datenbank (OT) zu übermitteln oder anzuzeigen, insbesondere in Form eines letzten in ihrer jeweiligen Teilnehmer-Datenbank (OT) enthaltenen Eintrags, insbesondere anhand des Zusatzes gemäß Anspruch 5; und
ein neu ermittelter Entscheider (C) dazu ausgebildet ist, zuerst sicherzustellen, dass alle Teilnehmer-Datenbanken (OT) einen gleichen Stand aufweisen, insbesondere durch Übermittlung der von einem vorherigen Entscheiders (C) freigegebenen Einträge auf die einzelnen Teilnehmer-Datenbanken (OT), vor einer Erzeugung weiterer Freigaben durch den neu ermittelten Entscheider (C).

8. Computerbasierte Konferenz-Anwendung, umfassend:
die verteilte Datenbank (DB) nach einem der Ansprüche 1 bis 7;
eine Konferenz-Applikation (KA) mit Nutzeroberfläche (NO), welche Konferenz-Applikation (KA) auf jedem Teilnehmer-Endgerät (TE_A, TE_B) ausgeführt wird oder ausführbar ist;
eine auf jedem Teilnehmer-Endgerät (TE_A, TE_B) ausgeführte oder ausführbare Hauptapplikation (CL) zum Anbinden der jeweiligen Konferenz-Applikation (KA) an die verteilte Datenbank (DB.

9. Konferenz-Anwendung (KA) nach Anspruch 8, umfassend:
einen Algorithmus (AL), vorzugsweise in der Hauptapplikation (CL), der dazu ausgebildet ist zu entscheiden, welche Teilnehmer (T1-T6) untereinander Video- und/oder Audio-Ströme übertragen, wozu jedem Teilnehmer (T1-T6) eine Nummer zugeordnet ist, insbesondere beginnend bei Eins und aufsteigend, welche Nummern vorzugsweise in Abhängigkeit von einer zeitlichen Reihenfolge des Einwählens eines Teilnehmers (T1-T6) in den Cluster vergeben sind, wobei in der Konferenz-Applikation für jeden Teilnehmer (T1-T6) festlegbar ist, zu welchem anderen Teilnehmer (T1-T6) ein Video-/Audio-Strom zu öffnen ist, wobei sich die einzelnen Teilnehmer (T1-T6) über die Datenkanäle untereinander koordinieren, vorzugsweise entsprechend der bekannten Cluster-Topologie.

10. Verfahren zum Unterhalten einer dezentralen, auf eine Mehrzahl von Teilnehmer-Endgeräte verteilten Datenbank (DB), die aus einer Mehrzahl einzelner Teilnehmer-Datenbanken (OT) mit jeweiligen Datensätzen (1, 2, 3, ...) gebildet ist, welche Datensätze (1, 2, 3, ...) über Datenkanäle miteinander synchronisiert werden oder synchronisierbar sind, bei der die Teilnehmer (T1-T6) sich zu einem dynamisch veränderlichen Cluster zusammenschließen;
einer der Teilnehmer (T1-T6) in dem Cluster als Entscheider (C) ausgewählt wird, wobei vorzugsweise nach jeder Veränderung des Clusters eine neue Auswahl des Entscheiders (C) erfolgt;
jeder der Teilnehmer (T1-T6) lokal Einträge in eine Teilnehmer-Datenaufnahmestruktur (RT) erzeugt und diese Einträge zumindest an den Entscheider (C) zur Freigabe übermittelt;
der Entscheider (C) seine eigenen Einträge und die von den anderen Teilnehmern (T1-T6) empfangenen Einträge sukzessive in seiner Teilnehmer-Datenbank (OT) anordnet und dann freigibt; und
die anderen Teilnehmer (T1-T6) die freigegebenen Einträge entsprechend ihrer Anordnung in der Teilnehmer-Datenbank (OT) des Entscheiders (C) in ihre jeweilige eigene Teilnehmer-Datenbank (OT) übernehmen, vorzugsweise sukzessive jeweils nach erfolgter Freigabe, höchst vorzugsweise automatisch.

11. Verfahren nach Anspruch 10, bei dem
jeder einzelne Teilnehmer (T1-T6) eine eindeutige Identifizierung (UUID) besitzt und diese Identifizierung den anderen Teilnehmern (T1-T6) in dem Cluster mitteilt, vorzugsweise bei jeder Veränderung des Clusters, wobei jeder einzelne Teilnehmer (T1-T6) anhand der ihm mitgeteilten Identifizierungen (UUID) den Entscheider (C) eindeutig bestimmt, zum Beispiel durch Anordnen der Identifizierungen (UUID) in einer eindeutigen Reihenfolge und Auswahl eines Teilnehmers (T1-T6) mit einer vorbestimmten Platzierung innerhalb dieser Reihenfolge als Entscheider (C), insbesondere des Erstplatzierten.

12. Verfahren nach Anspruch 10 oder 11, bei dem
die Teilnehmer-Datenbanken (OT) und/oder die Teilnehmer-Datenaufnahmestrukturen (RT) ausschließlich lokal auf dem jeweiligen Teilnehmer-Endgerät (TE_A, TE_B) gespeichert werden, insbesondere in einem Web-Browser (BT_A, BT_B).

13. Verfahren nach einem der Ansprüche 10 bis 12, bei dem
die einzelnen Teilnehmer (T1-T6) ihre Einträge in Teilnehmer-Datenaufnahmestrukturen (RT) ablegen, die als Speichermedien ausgebildet sind, in die nur geschrieben und aus denen nicht gelöscht werden kann; und/oder
bei dem jedem Eintrag wenigstens ein Zusatz hinzugefügt wird, der ihn eindeutig identifizierbar macht, insbesondere hinsichtlich des ihn erzeugenden Teilnehmers (T1-T6) und der zeitlichen Position oder Reihenfolge seiner Erzeugung.

14. Verfahren nach einem der Ansprüche 10 bis 13, bei dem
wenigstens eine Anzahl der Teilnehmer (T1-T6) die in die jeweilige Teilnehmer-Datenbank (OT) kopierten Einträge laufend überwacht und einen dort nicht enthaltenen eigenen Eintrag erneut zur Freigabe an den Entscheider (C) übermittelt; und/oder
bei dem die Teilnehmer (T1-T6), bei Rückbezug auf Anspruch 11, zusammen mit oder zusätzlich zu der Identifizierung (UUID) einen Stand ihrer jeweiligen Teilnehmer-Datenbank (OT) übermitteln, insbesondere in Form eines letzten in ihrer jeweiligen Teilnehmer-Datenbank (OT) enthaltenen Eintrags, insbesondere durch Übermitteln des Zusatzes gemäß Anspruch 13; wobei ein neu ermittelter Entscheider (C) zuerst sicherstellt, dass alle Teilnehmer-Datenbanken (OT) einen gleichen Stand aufweisen, insbesondere durch Übermittlung der von einem vorherigen Entscheiders (C) bereits freigegebenen Einträge an die einzelnen Teilnehmer-Datenbanken (OT), bevor der neu ermittelte Entscheider (C) selbst weitere Freigaben erzeugt.

15. Verfahren zum Durchführen einer computerbasierten Konferenz, umfassend:
Unterhalten einer verteilten Datenbank (DB) nach einem der Ansprüche 1 bis 7 oder gemäß einem der Ansprüche 10 bis 14;
Bereitstellen und Ausführen einer Konferenz-Applikation (KA) mit Nutzeroberfläche (NO) auf jedem Teilnehmer-Endgerät (TE_A, TE_B);
Anbinden der jeweiligen Konferenz-Applikation (KA) an die verteilte Datenbank (DB), bevorzugt durch Ausführen einer Hauptapplikation (CL) auf jedem Teilnehmer-Endgerät (TE_A, TE_B).
